# EUROPEAN PATENT SPECIFICATION

(11) **EP 2 840 729 B1**
(45) Date of publication and mention of the grant of the patent: **20.03.2019**
(21) Application number: 12874846.4
(22) Date of filing: 21.06.2012
(51) Int. Cl.: H04L 1/00, H04L 1/16, H04W 8/18, H04W 72/04, H04W 88/00, H04L 5/00

(54) **DATA SENDING METHOD AND DEVICE**
DATENSENDEVERFAHREN UND VORRICHTUNG
PROCÉDÉ ET DISPOSITIF D'ENVOI DE DONNÉES

(30) Priority: 20.04.2012 CN 201210119678
(43) Date of publication of application: 25.02.2015
(73) Proprietor: Sanechips Technology Co., Ltd., Shenzhen, Guangdong 518085 (CN)
(72) Inventor: YANG, Ning, Shenzhen Guangdong 518057 (CN); LU, Qiuyan, Shenzhen Guangdong 518057 (CN); CHEN, Yucong, Shenzhen Guangdong 518057 (CN)
(74) Representative: Novagraaf Technologies
(86) International application number: PCT/CN2012/077329
(87) International publication number: WO 2013/155784

(56) References cited:
- WO-A1-2005/064830
- CN-A- 101 248 648
- CN-A- 101 729 459
- CN-A- 102 316 017
- US-A1- 2010 226 349
- US-A1- 2011 205 934

## Description

### Technical Field

The present invention relates to the communication field, including, e.g., to a method and device for sending data.

### Background

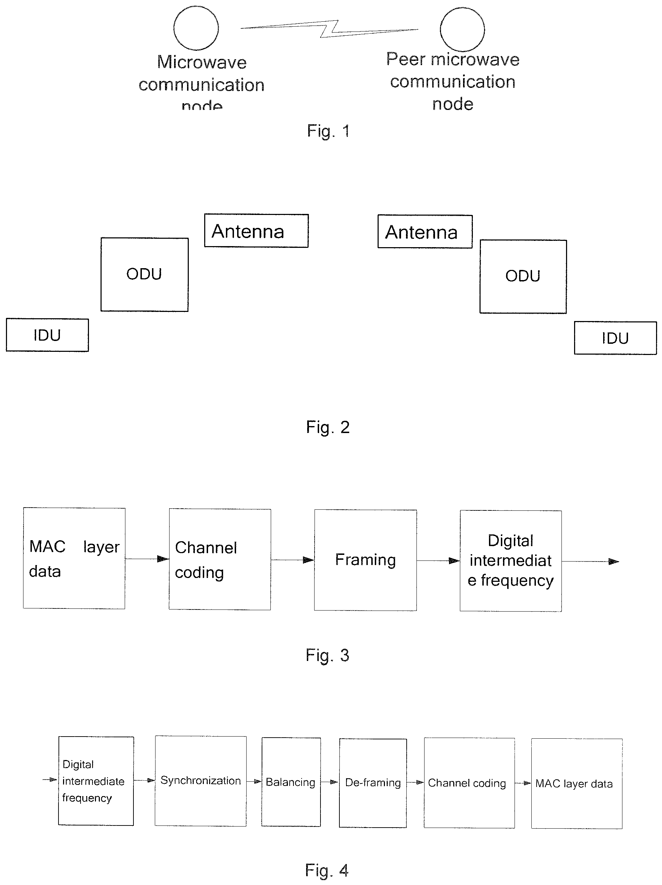

Peer-to-peer transmission is suitable for a variety of communication systems and, when applied to different communication systems, it can bring different advantages. For example, microwave communication, optical fiber communication and satellite communication are called the three major means for modern communication transmission. When the microwave communication employing peer-to-peer transmission, which is currently mainly applied to 2G/3G mobile carrier networks Provided the transmission of the voice and data service, it is featured by high transmission capacity, stable long-distance transmission quality, low investment, short construction period and convenient maintenance. Fig. 1 is a diagram illustrating the network topology structure of microwave communication employing peer-to-peer transmission in the related art, and as shown in Fig. 1, a peer-to-peer scenario is applicable to both the backbone transmission between base stations and that between a base station and a base station control station or an access gateway. Fig. 2 is a schematic diagram illustrating the structure of the communication nodes in a microwave communication network in the related art, and as shown in Fig. 2, microwave communication nodes consist of a modem unit and a radio frequency transceiver unit. The modem unit connected with a baseband interface is generally placed indoors and is therefore called an In-Door Unit (IDU).The radio frequency transceiver unit mainly for realizing radio frequency sending/receiving function is usually placed on an iron tower with an antenna and is therefore called an Out-Door Unit (ODU).

With the development of mobile wireless networks and Ethernet technologies, microwave transmission has been gradually developed from the conventional Time Division Multiplexing (TDM) service transmission to the current hybrid service transmission (that is the hybrid mode of various of data transmission such as the TDM, E1, Ethernet etc.), and the transmission capacity of the hybrid service transmission is increasing. The data from different interfaces is uniformly scheduled and packaged into data frames and then modulated by a modem unit and sent from a radio frequency unit.

Fig. 3 is a block diagram illustrating the processing carried out at the transmitting terminal of a modem unit in the related art, and as shown in Fig. 3, the processing includes: MAC layer data-channel coding-framing-digital intermediate frequency. Fig. 4 is a block diagram illustrating the processing carried out at the receiving terminal of a modem unit according in the related art, and as shown in Fig. 4, the processing includes: digital intermediate frequency-synchronization-balancing-de-framing-channel decoding-MAC layer data. Based on the processing principle of the foregoing microwave baseband modem unit, a data frame is directly send after the microwave system is powered, and the synchronization and balancing at the receiving terminal is gradually converged by user data, and certainly, pilots are inserted in the data at equal intervals to quicken the synchronization and balancing, however, this processing exists the following disadvantages: 1: the user data sent first is wasted as the synchronization and balancing is not converged; 2: although there are pilots in the data frames, the density of the pilots are usually relatively small for the sake of maximizing the throughput of the user, thus causing a relatively low convergence speed of the synchronization and balancing and further leading to the waste of the data sent first.

Therefore, the data transmission method for peer-to-peer communication (e.g. microwave communication) used in related art disables the correct receiving of a data frame by a receiving terminal, thus leading to the poor reliability of microwave communication.

US 2011/205934 A1 and US 2010/226349 A1 provide related technical solutions; however, the above mentioned problem still remains unsolved.

### Summary

The present invention provides a method and device for sending data to at least solve the problem that the data transmission method for peer-to-peer communication disables the correct receiving of a data frame by a receiving terminal, thus leading to the poor reliability of microwave communication. The invention is defined by the subject-matter of the independent claims 1 and 6. Preferred embodiments are defined in the dependent claims. Aspects or embodiments that do not fall under the scope of the claims are useful to understand the invention.

According to one aspect of the embodiments of the present invention, a method for sending data is provided, comprising: sending a training frame before sending a data frame of encapsulated data, wherein the training frame is used for training the convergence in data transmission from a sending terminal to a receiving terminal; and sending the data frame when it is determined that the data transmission from the sending terminal to the receiving terminal is convergent.

In this described embodiment, determining that the data transmission from the sending terminal to the receiving terminal is convergent comprises: receiving a reply training frame from the receiving terminal, wherein the reply training frame is used for indicating that the receiving terminal has received the training frame; and determining that the data transmission from the sending terminal to the receiving terminal is convergent, according to the training frame and the reply training frame.

In this described embodiment, determining that the data transmission from the sending terminal to the receiving terminal is convergent comprises: an initial state being a sending training frame request state and the reply training frame being a response frame and an acknowledgement frame; in the sending training frame request state, jumping to a sending training frame acknowledgement state if a response frame is received, or to a sending training frame response state if a request frame is received; in the sending training frame response state, jumping to the sending training frame acknowledgement state if a response frame or an acknowledgement frame is received; and in the sending training frame acknowledgement state, jumping to the sending training frame response state if a request frame is received and determining that the data transmission from the sending terminal to the receiving terminal is convergent if it is determined that the number of received request frames reaches a preset number.

In this described embodiment, determining that the data transmission from the sending terminal to the receiving terminal is convergent comprises: an initial state being a sending training frame request state and the reply training frame being a response frame; in the sending training frame request state, jumping to a sending training frame response state if a response frame is received; in the sending training frame response state, jumping to the sending training frame request state if a request frame is received; and in the sending training frame response state, determining that the data transmission from the sending terminal to the receiving terminal is convergent if it is determined that the number of received request frames reaches a preset number.

In this described embodiment, the modulation mode of the training frame or the reply training frame is the same as the modulation mode of the data frame, or the modulation mode of the data frame is higher than that of the training frame or the reply training frame.

In this described embodiment, the training frame and the reply training frame include an information field for indicating the type of the training frame.

According to another aspect of the embodiments of the present invention, a device for sending data is provided, comprising: a first sending component, configured to send a training frame before sending a data frame of encapsulated data, wherein the training frame is used for training the convergence in data transmission from a sending terminal to a receiving terminal; and a second sending component, configured to send the data frame when it is determined that the data transmission from the sending terminal to the receiving terminal is convergent.

In this described embodiment, the data sending device further comprising a determining component, configured to determine that the data transmission from the sending terminal to the receiving terminal is convergent; the determining component comprises: a receiving component and a first determining component: wherein the receiving component is configured to receive a reply training frame from the receiving terminal, wherein the reply training frame is used for indicating that the receiving terminal has received the training frame; and the first determining component is configured to determine that the data transmission from the sending terminal to the receiving terminal is convergent according to the training frame and the reply training frame.

In this described embodiment, the determining component, is further configured to determine that the data transmission from the sending terminal to the receiving terminal is convergent, comprising: the initial state is a sending training frame request state and the reply training frame is a response frame and an acknowledgement frame; in the sending training frame request state, jumping to a sending training frame acknowledgement state if a response frame is received, or to a sending training frame response state if a request frame is received; in the sending training frame response state, jumping to the sending training frame acknowledgement state if a response frame or an acknowledgement frame is received; and in the sending training frame acknowledgement state, jumping to the sending training frame response state if a request frame is received and determining that the data transmission from the sending terminal to the receiving terminal is convergent if it is determined that the times of sending training frame reaches a present number.

In this described embodiment, the determining component is further configured to configured to determine that the data transmission from the sending terminal to the receiving terminal is convergent, comprising: an initial state being a sending training frame request state and the reply training frame being a response frame; in the sending training frame request state, jumping to a sending training frame response state if a response frame is received; in the sending training frame response state, jumping to the sending training frame request state if a request frame is received; and in the sending training frame response state, determining that the data transmission from the sending terminal to the receiving terminal is convergent if it is determined the number of received request frames reaches a preset number.

By the embodiment of the present invention, by sending a training frame before sending a data frame of encapsulated data, wherein the training frame is used for training the convergence in data transmission from a sending terminal to a receiving terminal; and sending a data frame when it is determined that the data transmission from the sending terminal to the receiving terminal is convergent. It is solved the problem that data transmission method for peer-to-peer communication in related art disables the correct receiving of a data frame by a receiving terminal and consequentially leads to the poor reliability of microwave communication, thus enhancing the stability and the reliability of peer-to-peer data transmission.

### Brief Description of the Drawings

Drawings, provided for further understanding of the present invention and forming a part of the specification, are used to explain the present invention together with embodiments of the present invention rather than to limit the present invention. In the accompanying drawings:
Fig. 1 is a diagram for illustrating the network topology structure of microwave communication employing peer-to-peer transmission in a related technology;
Fig. 2 is a schematic diagram for illustrating the structure of the communication nodes in a microwave communication network in a related technology;
Fig. 3 is a block diagram for illustrating the processing carried out at the transmitting terminal of a modem unit in a related technology;
Fig. 4 is a block diagram for illustrating the processing carried out at the receiving terminal of a modem unit in a related technology;
Fig. 5 is a flowchart for illustrating a method for sending data according to an embodiment of the present invention;
Fig. 6 is a block diagram for illustrating the structure of a device for sending data according to an embodiment of the present invention;
Fig. 7 is a block diagram for illustrating the structure of a device for sending data according to a preferred embodiment of the present invention;
Fig. 8 is a block diagram for illustrating the processing carried out at the sending terminal and the receiving terminal of a modem unit according to an embodiment of the present invention; and
Fig. 9 is a schematic diagram for illustrating the structure of a state machine employing a 4-way handshake mechanism according to an embodiment.

### Detailed Description of the Embodiments

The preferred embodiments are described in conjunction with the drawings as follows. It should be noted that the embodiments and the characteristics of the embodiments can be combined with each other if no conflict is caused.

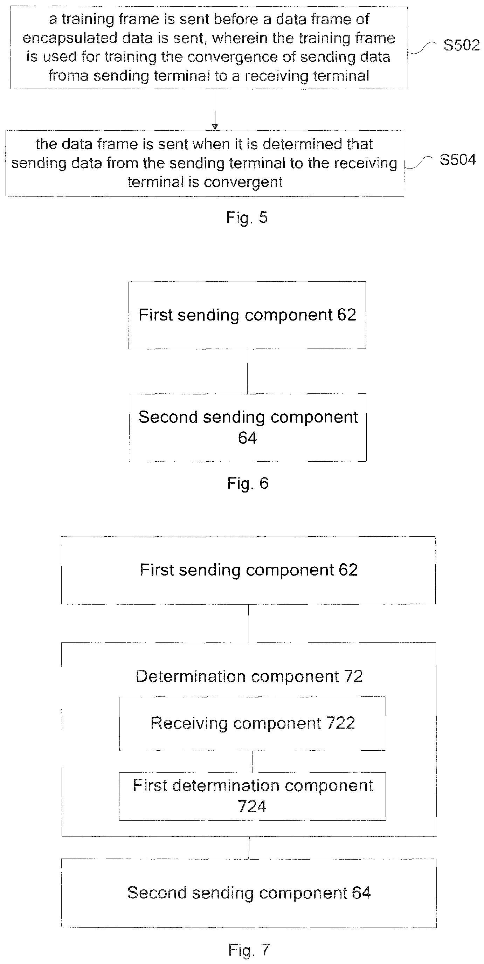

A method for sending data is provided in the embodiment of the present invention, Fig. 5 is a flowchart for illustrating a method for sending data according to the embodiment of the present invention, and as shown in Fig. 5, the flow comprises the following steps:
Step S502: a training frame is sent before a data frame of encapsulated data is sent, wherein the training frame is used for training the convergence in data transmission from a sending terminal to a receiving terminal; and
Step S504: the data frame is sent when it is determined that the data transmission from the sending terminal to the receiving terminal is convergent.

By executing the foregoing steps that a training frame is sent before a data frame is sent, the problem existing in the related art is effectively avoided that the data sending first is wasted because the data frames is directly sent. Under the training of the training frame, the receiving terminal can know the arrival of the data frame more accurately, thus greatly enhancing the stability and the accuracy of peer-to-peer data transmission.

In an example embodiment,, It can be determined that the data transmission from the sending terminal to the receiving terminal is convergent in many ways and preferably in the following way: a reply training frame is received from the receiving terminal, wherein the reply training frame is used for indicating that the training frame is received by the receiving terminal; it is determined that the data transmission from the sending terminal to the receiving terminal is convergent according to the training frame and the reply training frame. Apparently, It can be determined that the data transmission from the sending terminal to the receiving terminal is convergent in many ways according to the type of the reply training frame selected, for example, based on that the reply training frame is selected to be a response frame and an acknowledgement frame, it is determined that the data transmission from the sending terminal to the receiving terminal is convergent comprises: the initial state is a sending training frame request state, and the replay training frame is a response frame and an acknowledgement frame; in the sending training frame request state, jumping to a sending training frame acknowledgement state if a response frame is received, or to a sending training frame response state if a request frame is received; in a sending training frame response state, jumping to a sending training frame acknowledgement state if a response frame or an acknowledgement frame is received; and in the sending training frame acknowledgement state, jumping to the sending training frame response state if a request frame is received and determining that the data transmission from the sending terminal to the receiving terminal is convergent if it is determined that the number of received request frames reaches a preset number.

In the case where the reply training frame is merely a response frame, determining that sending data from the sending terminal to the receiving terminal is convergent comprises: an initial state is a sending training frame request state and the reply training frame is a response frame; in the sending training frame request state, jumping to a sending training frame response state if a response frame is received; in the sending training frame response state, jumping to the sending training frame request state if a request frame is received; and in the sending training frame response state, it is determined that the data transmission from the sending terminal to the receiving terminal is convergent if it is determined that the number of received request frames reaches a preset number.

It should be noted that, in order to confirm the type of the training frame rapidly, an information field for indicating the type of the training frame may be set and contained in the training frame and the reply training frame. Obviously, to achieve a more reliable transmission, channel coding may be performed on the training frame and the reply training frame. Further, the training frame or the replay training frame may be modulated in the same way with the data frame to guarantee an effective training effect of the training frame, and apparently, if Error Vector Measurement EVM is excellent, the modulation mode of the data frame may be more advanced than that of the training frame or the reply training frame.

A device for sending data is also provided in the embodiment. The device is used to realize the above-mentioned embodiment and preferred embodiment, and there is no further description for what is described already. As used in the following, the term "component" is a combination of softwares and/or hardwares which can realize predetermined functions. Although the device described in the following embodiment is preferably realized by softwares, the realization by hardwares or the combination of softwares and hardwares is also possible and conceived..

Fig. 6 is a block diagram for illustrating the structure of a device sending data according to an embodiment of the present invention, and as shown in Fig. 6, the device comprises a first sending component 62 and a second sending component 64. The device is described below.

The first sending component 62, is configured to send a training frame before sending a data frame of encapsulated data, wherein the training frame is used for training the convergence in data transmission from a sending terminal to a receiving terminal; and the second sending component 64, connected with the first sending component 62, is configured to send the data frame when it is determined that the data transmission from the sending terminal to the receiving terminal is convergent.

Fig.7 is a block diagram for illustrating the structure of a device for sending data according to a preferred embodiment of the present invention, and as shown in Fig. 7, except comprising all the structures shown in Fig. 6, the device further comprises a determining component 72. The determining component 72, is configured to determine that the data transmission from the sending terminal to the receiving terminal is convergent. The determining component 72 comprises a receiving component 722 and a first determining component 724. The receiving component 722 is configured to receive a reply training frame from the receiving terminal, wherein the reply training frame is used for indicating that the training frame is received by the receiving terminal, and the first determining component 724, connected with the receiving component 722, is configured to determine the data transmission from the sending terminal to the receiving terminal is convergent according to the training frame and the replay training frame.

In an example embodiment, the determining component 72, is further configured to determine the data transmission from the sending terminal to the receiving terminal is convergent, comprises: the initial state is a sending training frame request state and the reply training frame is a response frame and an acknowledgement frame; in the sending training frame request state, jumping to a sending training frame acknowledgement state if a response frame is received, or to a sending training frame response state if a request frame is received; in the sending training frame response state, jumping to the sending training frame acknowledgement state if a response frame or an acknowledgement frame is received; and in the sending training frame acknowledgement state, jumping to the sending training frame response state if a request frame is received, and it is determined the data transmission from the sending terminal to the receiving terminal is convergent if it is determined that the number of received request frames reaches a preset number.

In another example embodiment, the determining component 72, is further configured to determine the data transmission from the sending terminal to the receiving terminal is convergent comprises: the initial state is a sending training frame request state and the reply training frame is a response frame; in the sending training frame request state, jumping to a sending training frame response state if a response frame is received; in the sending training frame response state, jumping to the sending training frame request state if a request frame is received; and in the sending training frame response state, it is determined that the data transmission from the sending terminal to the receiving terminal is convergent if it is determined that the number of received request frames reaches a preset number.

It should be noted that the reliable transmission method and device for a peer-to-peer wireless communication system provided in the foregoing embodiments and preferred embodiments are mainly, but are not merely, applied to microwave communication, and the application of the transmission method and device may be extended to the whole wireless transmission field.

Aiming at the problem that the data transmission method for peer-to-peer communication used in related technologies disables the correct receiving of a data frame by a receiving terminal and consequentially leads to the poor reliability of microwave communication, a reliable transmission method and device for a peer-to-peer wireless communication system are provided in the embodiment, and the method, by adopting a 4-way handshake processing mechanism involving a training frame, guarantees the reliability of microwave communication and increases the throughput of the sent user data.

In embodiments of the reliable transmission method and device for a peer-to-peer wireless communication system disclosed herein. In the embodiment of the present invention, there is no change on the basic hardware of the microwave modulation/demodulation base band processing chip involved in a related, and it is merely added interaction between some components in the existing architecture, that is, the interaction between some components is increased on the basis of existing chip structure while the sending terminal and the receiving terminal of the microwave modulation/demodulation base band processing chip is still formed on a chip; the training of a training frame is completed through the interaction of the components so that the training frame can be sent to realize rapid convergence, and 4-way handshake can be flexibly completed so that the receiving terminal knows the arrival of the data frame, thereby guaranteeing the correct transmission of the first data frame.

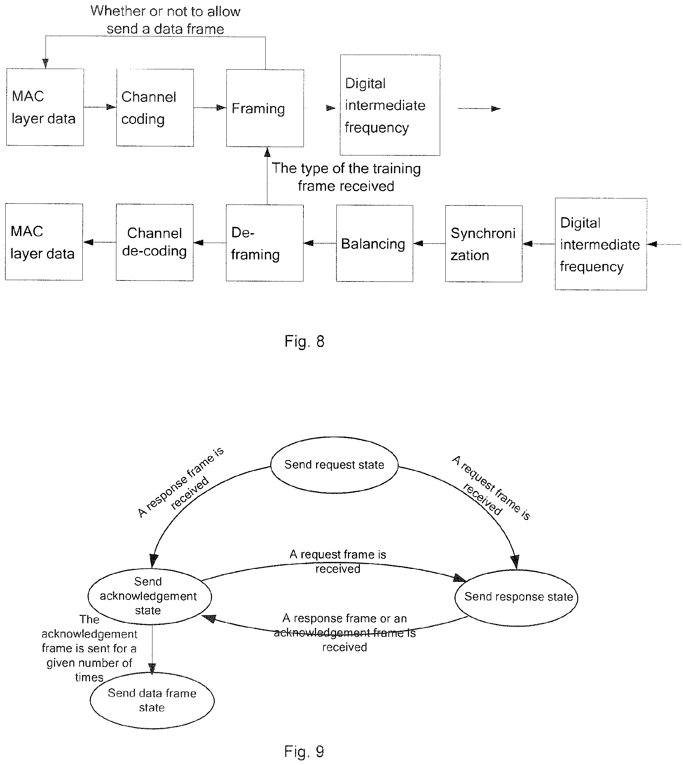

Fig. 8 is a block diagram for illustrating the processing carried out at the sending terminal and the receiving terminal of a modem unit according to an embodiment of the present invention, as shown in Fig. 8, except comprising the processing structures of a sending terminal and a receiving terminal in a related art, some interactions are added between the sending terminal and the receiving terminal, for example, the type of training frame sent from the sending terminal is confirmed when a de-framing processing is carried out by the de-framing component in the receiving terminal, and the type of the training frame is sent to the framing component for encapsulating frames in the sending terminal; further, it is judged that whether it is allowed to send the data frame by the MAC layer data component according to the type of the training frame received by the framing component. Based on the processing structure for interaction is added, a training frame preset by the sending terminal and the receiving terminal is sent before the data frame is sent. The receiving terminal can accurately know the arrival time of a data frame through the simple interaction among the components, thus effectively guaranteeing the correct transmission of the data frame.

In an example embodiment, the training frame may be set using the following method: the main body of the training frame consists of the symbols known by both the receiving terminal and the sending terminal, for example, a pseudo random sequence modulated by QPSK; further, in order to support the 4-way handshake of the sending terminal and the receiving terminal, in addition to a preamble for frame synchronization, a handshake information field is also added in each training frame, wherein the information field is used for indicating which type of the training frame is received, so that the sending terminal can determine the type of the training frame to be sent. Certainly, in order to more accurately know which type of the training frame is received, channel coding may be performed on the indication information, for example, RM coding may be performed on the indication information for many times to guarantee the reliable transmission of information.

To further guarantee the reliable implementation of communication, the receiving of a training frame of a certain type cannot be determined unless a plurality of training frames of this type (software-configurable) are successively received by the receiving terminal; the specific number of receiving the training frames may be set corresponding to system requirements (e.g. accuracy requirement and speed requirement), the sending terminal and the receiving terminal know that the frame transmitted at the moment is a data frame after the specific number of receiving the training frames are set, thus partly guaranteeing the correct data receiving by the receiving terminal. The training frame for training may be of many types, for example, of the following three types: Request training frame, Response training frame and ACK training frame.

Apparently, the type of the training frame may be determined in many ways, for example, the receiving terminal may directly send information to inform the sending terminal of the type of the training frame so that the receiving terminal accurately knows the sending time of a data frame. A preferred embodiment is provided in the present invention in which a receiving terminal confirms a data frame using a 4-way handshake mechanism. Firstly, states of the sending terminal and the receiving terminal in the modem unit are corresponded to that of a state machine, and then a result corresponding to a preset condition is set Fig. 9 is a schematic diagram for illustrating the structure of a state condition employing a 4-way handshake mechanism according to an embodiment of the present invention, as shown in Fig. 9, the station machine comprised four states: a send request state, a send response state, a send ACK state and a send data frame state, the jump among the four states is as follows: the initial state is the send request state; in the send request state, the send ACK state is jumped to if a response frame is received, or the send response state is jumped to if a request frame is received; in the send response state, the send ACK state is jumped to if a response frame or an ACK frame is received; in the send ACK state, the send response state is jumped to if a request frame is received, and the send data frame state is jumped to if the number of sending ACK frames reaches a preset number; and user data is continuously sent in the send data frame state.

Before receiving a data frame, the receiving terminal and the sending terminal preset the number of the ACK frames of which the next frame is a data frame so as to guarantee the correct decoding of the first data frame; and it should be noted that the first data frame should be modulated in the same way with the training frames so as to guarantee an effective training effect of the training frame, and undoubtedly, the modulation mode of the first data frame may be more advanced than that of the training frame if EVM is excellent.

By adding the interaction between processing components of existing modem unit, that is, by increasing little cost, the foregoing embodiments and preferred embodiments achieve the following effects: (1) Sending known symbols in the synchronization establishment of a link is beneficial to the rapid establishment of a link between two peer nodes; (2) data may be sent during the time saved from the establishment of the link, which increases the throughput of user data; (3) a modulation and coding combination of a high channel utilization rate may be directly used when the channel condition is good according to a link establishment condition, thus further increasing the throughput of user data; (4) the smart 4-way handshake mechanism provides convenience for the receiving terminal to synchronously know the arrival of a data frame, thus improving the stability of the whole system; (5) due to the training of the training frame, the whole receiving machine is maintained in an excellent state, thus guaranteeing the successful decoding of the first data frame, simplifying the process of judging whether the data received by the receiving terminal is a data frame and consequentially simplifying the scheduling of the whole receiving machine.

Apparently, it should be appreciated by those skilled in the art that each component or step described in the present invention can be realized by a universal computer and that the components or steps may be integrated on a single computer or distributed on a network consisting of a plurality of computers, optionally, the components or steps may be realized by executable program codes so that the components or steps can be stored in a memory to be executed by a computer, and in some cases, the steps shown or described herein can be executed in a sequence different from this presented herein, or the components or steps are formed into integrated circuit components, or several of the components or steps are formed into integrated circuit components. Therefore, the present invention is not limited to the combination of specific hardware and software.

The mentioned above is only preferred embodiments of the present invention but not limitation to the present invention, it should be appreciated that various modification and variations can be devised by those of ordinary skill in the art. Any modification, substitute or improvement devised without departing from the scope of the present invention should fall within the protection range of the present invention.

## Claims

1. A method for sending data, comprising:
sending a training frame before sending a data frame of encapsulated data, wherein the training frame is used for training the convergence in data transmission from a sending terminal to a receiving terminal; and
sending the data frame when it is determined that the data transmission from the sending terminal to the receiving terminal is convergent;
**characterized in that**, determining that the data transmission from the sending terminal to the receiving terminal is convergent comprises: receiving a reply training frame from the receiving terminal, wherein the reply training frame is used for indicating that the receiving terminal has received the training frame and informing the sending terminal of a type of the training frame; and determining that the data transmission from the sending terminal to the receiving terminal is convergent, according to the training frame and the reply training frame.

2. The method according to claim 1, **characterized in that**, determining that the data transmission from the sending terminal to the receiving terminal is convergent comprises:
an initial state being a sending training frame request state and the reply training frame being a response frame and an acknowledgement frame;
in the sending training frame request state, jumping to a sending training frame acknowledgement state if a response frame is received, or to a sending training frame response state if a request frame is received;
in the sending training frame response state, jumping to a sending training frame acknowledgement state if a response frame or an acknowledgement frame is received; and
in the sending training frame acknowledgement state, jumping to the sending training frame response state if a request frame is received and determining that the data transmission from the sending terminal to the receiving terminal is convergent if it is determined that the number of received request frames reaches a preset number.

3. The method according to claim 1, **characterized in that**, determining that the data transmission from the sending terminal to the receiving terminal is convergent comprises:
the initial state being a sending training frame request state and the reply training frame being a response frame;
in the sending training frame request state, jumping to a sending training frame response state if a response frame is received;
in the sending training frame response state, jumping to the sending training frame request state if a request frame is received; and
in the sending training frame response state, determining that the data transmission from the sending terminal to the receiving terminal is convergent if it is determined that the number of received request frames reaches a preset number.

4. The method according to any of claims 1 to 3, **characterized in that**, the modulation mode of the training frame or the reply training frame is the same as the modulation mode of the data frame, or the modulation mode of the data frame is higher than that of the training frame or the reply training frame.

5. The method according to any of claims 1 to 3, **characterized in that**, the training frame and the reply training frame include an information field for indicating the type of the training frame.

6. A data sending device comprising:
a first sending component (62), configured to send a training frame before sending a data frame of encapsulated data, wherein the training frame is used for training the convergence in data transmission from a sending terminal to a receiving terminal; and
a second sending component (64), configured to send the data frame when it is determined that the data transmission from the sending terminal to the receiving terminal is convergent;
**characterized by** further comprising: a determining component (72), configured to determine that the data transmission from the sending terminal to the receiving terminal is convergent, wherein the determining component (72) comprises a receiving component (722) and a first determining component (724), wherein the receiving component (722) is configured to receive a reply training frame from the receiving terminal, wherein the reply training frame is used for indicating that the receiving terminal has received the training frame and informing the sending terminal of a type of the training frame; and the first determining component (724) is configured to determine that the data transmission from the sending terminal to the receiving terminal is convergent, according to the training frame and the reply training frame.

7. The device according to claim 6, **characterized in that**, the determining component (72) is further configured to determine that the data transmission from the sending terminal to the receiving terminal is convergent, wherein determining that the data transmission from the sending terminal to the receiving terminal is convergent, comprises: an initial state being a sending training frame request state and the reply training frame being a response frame and an acknowledgement frame; in the sending training frame request state, jumping to a sending training frame acknowledgement state if a response frame is received, or to a sending training frame response state if a request frame is received; in the sending training frame response state, jumping to the sending training frame acknowledgement state if a response frame or an acknowledgement frame is received; and in the sending training frame acknowledgement state, jumping to the sending training frame response state if a request frame is received and determining that the data transmission from the sending terminal to the receiving terminal is convergent if it is determined that the number of received request frames reaches a preset number.

8. The device according to claim 6, **characterized in that**, the determining component (72) is further configured to determine that the data transmission from the sending terminal to the receiving terminal is convergent, wherein determining that sending data from the sending terminal to the receiving terminal comprises: an initial state being a sending training frame request state and the reply training frame being a response frame; in the sending training frame request state, jumping to a sending training frame response state if a response frame is received; in the sending training frame response state, jumping to the sending training frame request state if a request frame is received; and in the sending training frame response state, determining that the data transmission from the sending terminal to the receiving terminal is convergent if it is determined that the number of received request frames reaches a preset number.

## Patentansprüche

1. Datensendeverfahren, umfassend:
Senden eines Trainingsrahmens vor dem Senden eines Datenrahmens verkapselter Daten, wobei der Trainingsrahmen zum Trainieren der Konvergenz bei der Datenübertragung von einem Sendeendgerät zu einem Empfangsendgerät verwendet wird; und
Senden des Datenrahmens, falls bestimmt wird, dass die Datenübertragung von dem Sendeendgerät zu dem Empfangsendgerät konvergent ist;
**dadurch gekennzeichnet, dass** Bestimmen, dass die Datenübertragung von dem Sendeendgerät zu dem Empfangsendgerät konvergent ist, Folgendes umfasst: Empfangen eines Antwort-Trainingsrahmens von dem Empfangsendgerät, wobei der Antwort-Trainingsrahmen verwendet wird, um darauf hinzuweisen, dass das Empfangsendgerät den Trainingsrahmen empfangen hat, und das Sendeendgerät über eine Art des Trainingsrahmens zu informieren; und Bestimmen, dass die Datenübertragung von dem Sendeendgerät zu dem Empfangsendgerät konvergent ist, entsprechend dem Trainingsrahmen und dem Antwort-Trainingsrahmen.

2. Verfahren nach Anspruch 1, **dadurch gekennzeichnet, dass** Bestimmen, dass die Datenübertragung von dem Sendeendgerät zu dem Empfangsendgerät konvergent ist, umfasst:
die Tatsache, dass ein Anfangszustand ein Anfragezustand zum Senden eines Trainingsrahmens ist und der Antwort-Trainingsrahmen ein Reaktionsrahmen und ein Bestätigungsrahmen ist;
in dem Anfragezustand zum Senden eines Trainingsrahmens Springen in einen Bestätigungszustand zum Senden eines Trainingsrahmens, falls ein Reaktionsrahmen empfangen wird, oder in einen Reaktionszustand zum Senden eines Trainingsrahmens, falls ein Anfragerahmen empfangen wird;
in dem Reaktionszustand zum Senden eines Trainingsrahmens Springen in einen Bestätigungszustand zum Senden eines Trainingsrahmens, falls ein Reaktionsrahmen oder ein Bestätigungsrahmen empfangen wird; und
in dem Bestätigungszustand zum Senden eines Trainingsrahmens Springen in den Reaktionszustand zum Senden eines Trainingsrahmens, falls ein Anfragerahmen empfangen wird, und Bestimmen, dass die Datenübertragung von dem Sendeendgerät zu dem Empfangsendgerät konvergent ist, falls bestimmt wird, dass die Anzahl der empfangenen Anfragerahmen eine voreingestellte Anzahl erreicht.

3. Verfahren nach Anspruch 1, **dadurch gekennzeichnet, dass** Bestimmen, dass die Datenübertragung von dem Sendeendgerät zu dem Empfangsendgerät konvergent ist, umfasst:
die Tatsache, dass der Anfangszustand ein Anfragezustand zum Senden eines Trainingsrahmens ist und der Antwort-Trainingsrahmen ein Reaktionsrahmen ist;
in dem Anfragezustand zum Senden eines Trainingsrahmens Springen in einen Reaktionszustand zum Senden eines Trainingsrahmens, falls ein Reaktionsrahmen empfangen wird;
in dem Reaktionszustand zum Senden eines Trainingsrahmens Springen in einen Anfragezustand zum Senden eines Trainingsrahmens, falls ein Anfragerahmen empfangen wird; und
in dem Reaktionszustand zum Senden eines Trainingsrahmens Bestimmen, dass die Datenübertragung von dem Sendeendgerät zu dem Empfangsendgerät konvergent ist, falls bestimmt wird, dass die Anzahl der empfangenen Anfragerahmen eine voreingestellte Anzahl erreicht.

4. Verfahren nach einem der Ansprüche 1 bis 3, **dadurch gekennzeichnet, dass** der Modulationsmodus des Trainingsrahmens oder des Antwort-Trainingsrahmens derselbe wie der Modulationsmodus des Datenrahmens ist, oder der Modulationsmodus des Datenrahmens größer als jener des Traainingsrahmens oder des Antwort-Trainingsrahmens ist.

5. Verfahren nach einem der Ansprüche 1 bis 3, **dadurch gekennzeichnet, dass** der Trainingsrahmen und der Antwort-Trainingsrahmen ein Informationsfeld beinhalten, um auf die Art des Trainingsrahmens hinzuweisen.

6. Datensendevorrichtung, umfassend:
eine erste Sendekomponente (62), konfiguriert, um einen Trainingsrahmen vor dem Senden eines Datenrahmens verkapselter Daten zu senden, wobei der Trainingsrahmen zum Trainieren der Konvergenz bei der Datenübertragung von einem Sendeendgerät zu einem Empfangsendgerät verwendet wird; und
eine zweite Sendekomponente (64), konfiguriert, um den Datenrahmen zu senden, falls bestimmt wird, dass die Datenübertragung von dem Sendeendgerät zu dem Empfangsendgerät konvergent ist;
**dadurch gekennzeichnet, dass** sie weiter umfasst: eine Bestimmungskomponente (72), konfiguriert, um zu bestimmen, dass die Datenübertragung von dem Sendeendgerät zu dem Empfangsendgerät konvergent ist, wobei die Bestimmungskomponente (72) eine Empfangskomponente (722) und eine erste Bestimmungskomponente (724) umfasst, wobei die Empfangskomponente (722) konfiguriert ist, um einen Antwort-Trainingsrahmen von dem Empfangsendgerät zu empfangen, wobei der Antwort-Trainingsrahmen verwendet wird, um darauf hinzuweisen, dass das Empfangsendgerät den Trainingsrahmen empfangen hat, und das Sendeendgerät über eine Art des Trainingsrahmens zu informieren; und die erste Bestimmungskomponente (724) konfiguriert ist, um zu bestimmen, dass die Datenübertragung von dem Sendeendgerät zu dem Empfangsendgerät konvergent ist, entsprechend dem Trainingsrahmen und dem Antwort-Trainingsrahmen.

7. Vorrichtung nach Anspruch 6, **dadurch gekennzeichnet, dass** die Bestimmungskomponente (72) weiter konfiguriert ist, um zu bestimmen, dass die Datenübertragung von dem Sendeendgerät zu dem Empfangsendgerät konvergent ist, wobei Bestimmen, dass die Datenübertragung von dem Sendeendgerät zu dem Empfangsendgerät konvergent ist, umfasst: die Tatsache, dass ein Anfangszustand ein Anfragezustand zum Senden eines Trainingsrahmens ist und der Antwort-Trainingsrahmen ein Reaktionsrahmen und ein Bestätigungsrahmen ist; in dem Anfragezustand zum Senden eines Trainingsrahmens Springen in einen Bestätigungszustand zum Senden eines Trainingsrahmens, falls ein Reaktionsrahmen empfangen wird, oder Reaktionszustand zum Senden eines Trainingsrahmens, falls ein Anfragerahmen empfangen wird; in dem Reaktionszustand zum Senden eines Trainingsrahmens Springen in den Bestätigungszustand zum Senden eines Trainingsrahmens, falls ein Reaktionsrahmen oder ein Bestätigungsrahmen empfangen wird; und in dem Bestätigungszustand zum Senden eines Trainingsrahmens Springen in den Reaktionszustand zum Senden eines Trainingsrahmens, falls ein Anfragerahmen empfangen wird, und Bestimmen, dass die Datenübertragung von dem Sendeendgerät zu dem Empfangsendgerät konvergent ist, falls bestimmt wird, dass die Anzahl der empfangenen Anfragerahmen eine voreingestellte Anzahl erreicht.

8. Vorrichtung nach Anspruch 6, **dadurch gekennzeichnet, dass** die Bestimmungskomponente (72) weiter konfiguriert ist, um zu bestgimmen, dass die Datenübertragung von dem Sendeendgerät zu dem Empfangsendgerät konvergent ist, wobei Bestimmen, dass Senden von Daten von dem Sendeendgerät zu dem Empfangsendgerät umfasst: die Tatsache, dass ein Anfangszustand ein Anfragezustand zum Senden eines Trainingsrahmens ist und der Antwort-Trainingsrahmen ein Reaktionsrahmen ist; in dem Anfragezustand zum Senden eines Trainingsrahmens Springen in einen Reaktionszustand zum Senden eines Trainingsrahmens, falls ein Reaktionsrahmen empfangen wird; in dem Reaktionszustand zum Senden eines Trainingsrahmens Springen in einen Anfragezustand zum Senden eines Trainingsrahmens, falls ein Anfragerahmen empfangen wird; und in dem Reaktionszustand zum Senden eines Trainingsrahmens Bestimmen, dass die Datenübertragung von dem Sendeendgerät zu dem Empfangsendgerät konvergent ist, falls bestimmt wird, dass die Anzahl der empfangenen Anfragerahmen eine voreingestellte Anzahl erreicht.

## Revendications

1. Procédé d'envoi de données, comprenant :
l'envoi d'une trame d'apprentissage avant l'envoi d'une trame de données de données encapsulées, dans lequel la trame d'apprentissage est utilisée pour l'apprentissage de la convergence dans une transmission de données d'un terminal d'envoi à un terminal de réception ; et
l'envoi de la trame de données lorsqu'il est déterminé que la transmission de données du terminal d'envoi au terminal de réception est convergente ;
**caractérisé en ce que** la détermination que la transmission de données du terminal d'envoi au terminal de réception est convergente comprend : la réception d'une trame d'apprentissage de réplique depuis le terminal de réception, dans lequel la trame d'apprentissage de réplique est utilisée pour indiquer que le terminal de réception a reçu la trame d'apprentissage et informer le terminal d'envoi d'un type de la trame d'apprentissage ; et la détermination que la transmission de données du terminal d'envoi au terminal de réception est convergente, selon la trame d'apprentissage et la trame d'apprentissage de réplique.

2. Procédé selon la revendication 1, **caractérisé en ce que** la détermination que la transmission de données du terminal d'envoi au terminal de réception est convergente comprend :
le fait qu'un état initial soit un état de demande d'envoi de trame d'apprentissage et la trame d'apprentissage de réplique soit une trame de réponse et une trame d'acquittement ;
dans l'état de demande d'envoi de trame d'apprentissage, le saut à un état d'acquittement d'envoi de trame d'apprentissage si une trame de réponse est reçue, ou à un état de réponse d'envoi de trame d'apprentissage si une trame de demande est reçue ;
dans l'état de réponse d'envoi de trame d'apprentissage, le saut à un état d'acquittement d'envoi de trame d'apprentissage si une trame de réponse ou une trame d'acquittement est reçue ; et
dans l'état d'acquittement d'envoi de trame d'apprentissage, le saut à l'état de réponse d'envoi de trame d'apprentissage si une trame de demande est reçue et la détermination que la transmission de données du terminal d'envoi au terminal de réception est convergente s'il est déterminé que le nombre de trames de demande reçues atteint un nombre prédéfini.

3. Procédé selon la revendication 1, **caractérisé en ce que** la détermination que la transmission de données du terminal d'envoi au terminal de réception est convergente comprend :
le fait que l'état initial soit un état de demande d'envoi de trame d'apprentissage et la trame d'apprentissage de réplique soit une trame de réponse ;
dans l'état de demande d'envoi de trame d'apprentissage, le saut à un état de réponse d'envoi de trame d'apprentissage si une trame de réponse est reçue ;
dans l'état de réponse d'envoi de trame d'apprentissage, le saut à l'état de demande d'envoi de trame d'apprentissage si une trame de demande est reçue ; et
dans l'état de réponse d'envoi de trame d'apprentissage, la détermination que la transmission de données du terminal d'envoi au terminal de réception est convergente s'il est déterminé que le nombre de trames de demande reçues atteint un nombre prédéfini.

4. Procédé selon l'une quelconque des revendications 1 à 3, **caractérisé en ce que** le mode de modulation de la trame d'apprentissage ou de la trame d'apprentissage de réplique est le même que le mode de modulation de la trame de données, ou le mode de modulation de la trame de données est plus élevé que celui de la trame d'apprentissage ou de la trame d'apprentissage de réplique.

5. Procédé selon l'une quelconque des revendications 1 à 3, **caractérisé en ce que** la trame d'apprentissage et la trame d'apprentissage de réplique incluent un champ d'informations pour indiquer le type de la trame d'apprentissage.

6. Dispositif d'envoi de données comprenant :
un premier composant d'envoi (62), configuré pour envoyer une trame d'apprentissage avant d'envoyer une trame de données de données encapsulées, dans lequel la trame d'apprentissage est utilisée pour l'apprentissage de la convergence dans une transmission de données d'un terminal d'envoi à un terminal de réception ; et
un second composant d'envoi (64), configuré pour envoyer la trame de données lorsqu'il est déterminé que la transmission de données du terminal d'envoi au terminal de réception est convergente ;
**caractérisé en ce qu'**il comprend en outre : un composant de détermination (72), configuré pour déterminer que la transmission de données du terminal d'envoi au terminal de réception est convergente, dans lequel le composant de détermination (72) comprend un composant de réception (722) et un premier composant de détermination (724), dans lequel le composant de réception (722) est configuré pour recevoir une trame d'apprentissage de réplique depuis le terminal de réception, dans lequel la trame d'apprentissage de réplique est utilisée pour indiquer que le terminal de réception a reçu la trame d'apprentissage et pour informer le terminal d'envoi d'un type de la trame d'apprentissage ; et le premier composant de détermination (724) est configuré pour déterminer que la transmission de données du terminal d'envoi au terminal de réception est convergente, selon la trame d'apprentissage et la trame d'apprentissage de réplique.

7. Dispositif selon la revendication 6, **caractérisé en ce que** le composant de détermination (72) est configuré pour déterminer que la transmission de données du terminal d'envoi au terminal de réception est convergente, dans lequel la détermination que la transmission de données du terminal d'envoi au terminal de réception est convergente, comprend : le fait qu'un état initial soit un état de demande d'envoi de trame d'apprentissage et la trame d'apprentissage de réplique soit une trame de réponse et une trame d'acquittement ; dans l'état de demande d'envoi de trame d'apprentissage, le saut à un état d'acquittement d'envoi de trame d'apprentissage si une trame de réponse est reçue, ou à un état de réponse d'envoi de trame d'apprentissage si une trame de demande est reçue ; dans l'état de réponse d'envoi de trame d'apprentissage, le saut à l'état d'acquittement d'envoi de trame d'apprentissage si une trame de réponse ou une trame d'acquittement est reçue ; et dans l'état d'acquittement d'envoi de trame d'apprentissage, le saut à l'état de réponse d'envoi de trame d'apprentissage si une trame de demande est reçue et la détermination que la transmission de données du terminal d'envoi au terminal de réception est convergente s'il est déterminé que le nombre de trames de demande reçues atteint un nombre prédéfini.

8. Dispositif selon la revendication 6, **caractérisé en ce que** le composant de détermination (72) est en outre configuré pour déterminer que la transmission de données du terminal d'envoi au terminal de réception est convergente, dans lequel la détermination que l'envoi de données du terminal d'envoi au terminal de réception comprend : le fait qu'un état initial soit un état de demande d'envoi de trame d'apprentissage et la trame d'apprentissage de réplique soit une trame de réponse ; dans l'état de demande d'envoi de trame d'apprentissage, le saut à un état de réponse d'envoi de trame d'apprentissage si une trame de réponse est reçue ; dans l'état de réponse d'envoi de trame d'apprentissage, le saut à l'état de demande d'envoi de trame d'apprentissage si une trame de demande est reçue ; et dans l'état de réponse d'envoi de trame d'apprentissage, la détermination que la transmission de données du terminal d'envoi au terminal de réception est convergente s'il est déterminé que le nombre de trames de demande reçues atteint un nombre prédéfini.
